# EUROPEAN PATENT APPLICATION

(11) **EP 3 575 084 A1**
(43) Date of publication of application: **04.12.2019**
(21) Application number: 18175479.7
(22) Date of filing: 01.06.2018
(51) Int. Cl.: B32B 27/08, B32B 27/14, B32B 27/36, B32B 3/26, B32B 7/04, B32B 7/06, B32B 3/02, B65D 75/32, B65D 81/34

(54) **FILM STRIP FOR SEALING TRAYS**

(71) Applicant: Amcor Europe Group Management, Bristol BS30 8XP (GB)
(72) Inventor: Ellis, Adam, Evesham, Worcestershire WR11 8LF (GB)
(74) Representative: Suisse Technology Partners AG

(57) **Abstract**

Film strip (10) for sealing trays, in particular for sealing trays containing a ready meal. The film strip (10) comprises two superimposed polymer films (20, 30) that are pattern laminated together by a continuous intermediate laminating layer (40) made of a laminating lacquer or an adhesive, wherein one first film (20) does not feature any printing and is made of a polyester and the other second film (30) is a flexible film which is at least partially surface and/or reverse printed (80). The laminating layer (40) features one or more lines (A, B, C) of repetitive openings (45). Each line of repetitive openings (45) run along the longitudinal direction of the film strip (10). The superimposed films (20, 30) are not laminated to each other in the areas defined by the openings (45) thus forming loose film parts in said areas. The invention further relates to a use of the film strip (10) for providing lids for sealing trays (60), a packaging (70) comprising a tray (60) having a peripheral sealing flange (65) and a lid (11) sealed to the flange (65) and peelable therefrom, and a method for producing a packaging (70) closed by a peelable lid made of the film strip (10).

## Description

The invention relates to a film strip for sealing trays, in particular for trays comprising a ready meal, the film strip has on both sides a lateral film border and comprises two superimposed polymer films that are pattern laminated together by a continuous intermediate laminating layer made of a laminating lacquer or an adhesive, wherein one first film does not feature any printing and is made of a polyester and the other second film is a flexible film which is at least partially surface and/or reverse printed. The invention further relates to a use of the film strip for providing lids for sealing trays comprising a ready meal, a packaging comprising a tray and a lid sealed to the tray and peelable therefrom as well as a method for producing a packaging closed by a peelable lid made of the film strip.

Ready meal packages known in the art comprise a tray for receiving food and an unprinted lid often made of PET, wherein the lid is usually stamped out from a reel of a film strip. Ready meal packages usually have a carton sleeve wrapped around the capped package, wherein the carton sleeve usually contains the information about the packaged good and the preparation instruction. The carton sleeve having the product information is a separate packaging part that should be removed before the packaged good is boiled in a microwave or baking oven. The removability of the carton sleeve is important for the avoidance of carton combustion and for avoidance of food contamination by migration of ink particles of the sleeve into the food containing area of the package.

The application of a separate carton sleeve to a sealed packaging implies an additional process step. Furthermore, carton sleeves can easily be damaged during transport and storage, wherein the sleeve may be lost such that the packaging and its content is no longer identifiable.

The aim of present invention is to avoid the use of a separate carton sleeve for providing the information about the packaged good of a ready meal or its food preparation instruction. It should be noted hereby that boiling of a ready meal has be done in a fully or partially sealed packaging, wherein in order to prevent food contamination by migration of ink particles, the printed part of the packaging containing the information about the packaged good and possible food preparation instructions has to be removed before putting a ready meal packaging in the oven.

The goal of present invention is solved by providing a film strip having the features described in claim 1. Said film strip is then used for sealing trays, in particular for sealing trays containing a ready meal. Preferred embodiments of the film strip are described in the claims depending on claim 1. The use of the film strip for providing peelable lids for sealing openings of trays is described in claim 11 and preferred options of the use are described in the claims depending on claim 11. Packages having a tray sealed with a lid made of a punched or cut out self-contained area of an inventive film strip are described in claims 16 and preferred embodiments of the packages are described in the claims depending on claim 16. A method for producing a packaging sealed by a peelable lid made of the film strip according to claims 1 to 10 is described in claim 21.

The inventive film strip has on both sides a lateral film border and comprises two superimposed polymer films that are pattern laminated together by a continuous intermediate laminating layer made of a laminating lacquer or an adhesive, wherein one first film does not feature any printing and is made of a polyester and the other second film is a flexible film which is at least partially surface and/or reverse printed. The laminating layer features one or more lines (A, B, C) of repetitive openings, holes or cut-outs, wherein each line of repetitive openings runs along the longitudinal direction of the film strip. The openings of two adjacent parallel lines are positioned at a predefined distance w and the openings of each outermost line have a predefined distance D1, D2 from the lateral film borders. The predefined distance means a predefined fixed distance that is the same for all openings in one and the same line. In the areas of the film strip comprising the openings of the laminating layer the superimposed films are not laminated to each other, thus forming loose film parts in these areas.

The film strip may be a long strip usually wound up on a coil.

Each of the openings has a surrounding border. The surface or reverse printing of the second film is only present within the areas of the second film lying above the surrounding borders of the openings.

The first and/or the second film is/are preferably made of a heat sealable polymer. In particular, each of the first and second films is made of a polymer of the group consisting of polyethylene terephthalate (PET), polybutylene terephthalate (PBT), polylactide (PLA) and polyethylene naphthalate (PEN).

Each area of the film strip containing a complete opening of the laminating layer describes a self-contained area. A complete opening of the laminating layer means the whole area of the film strip containing a full surrounding border of an opening as well as the opening itself. Consequently, each self-contained area of the film strip contains the superposed first and second films, but there is no adhesive layer between said two films in said area within the surrounding border of the opening.

In a preferred embodiment, the first film not having any printing is coated in a peripheral section of the self-contained areas on its surface opposite to the partially printed second film with a heat sealing layer in the form of a first circumferential sealing section. Said first circumferential sealing section is preferably arranged at a predefined distance d to the surrounding border of each opening. In particular, said heat sealing layer in the form of a circumferential sealing section is used if either the first film or the sealing area of a tray to be closed is not or only poorly heat sealable.

In a further preferred embodiment of the film strip the partially printed second film on its surface directed to the first film or the first film on its surface directed to the second film is coated in a peripheral section of each self-contained area with a heat sealing layer in the form of a second circumferential sealing section. Said second circumferential sealing section is preferably applied if at least one of the first and the second films is not or only poorly heat sealable.

In an even further preferred embodiment the first and second circumferential sealing sections are superimposed and are arranged each at the same predefined distance d to the surrounding border of each opening.

The first and second circumferential sealing sections preferably run along a peripheral border area of each individual self-contained area, wherein the first circumferential sealings sections are arranged on the surface of the first film lying opposite to the partially printed second film and the second circumferential sealings sections are arranged between the first and second films.

In a further preferred embodiment, the first film not having any printing is perforated. This allows providing packages having a tray that is sealed with a perforated lid made of an inventive film strip. Such a package has an interior space that is vented when it is heated in an oven.

The inventive film strip is preferably used for providing peelable lids for sealing trays comprising a ready meal. In this case, the first film sealed to a flange of the tray has to be peelable in order to gain access to the ready meal when boiled, but also the second film having the printing has to be peelable from the first film in order to be removed before putting the packaging into an oven. The trays to be closed by lids made of an inventive film strip have preferably all the same size and form and each of said trays has an outer self-contained edge surrounding a peripheral sealing flange of the tray. The areas of the film strip containing the openings of the laminating layer describe a number of individual self-contained areas not featuring any laminating lacquer or adhesive between the first and second films, wherein the extent of each of said individual self-contained area corresponds to at least the area enclosed by the outer self-contained edge of the tray to be closed and wherein each of the individual self-contained area is aligned with an area enclosed by an outer self-contained edge of the tray such that each self-contained area of the film strip protrudes beyond a respective sealing flange. The film strip is arranged to have the unprinted first film directed to the sealing flanges of the trays. The superimposed first and second films of the film strip are sealed together in the areas above and along the whole circumferential sealing flange of each tray and to the whole circumferential sealing flange of each tray in one single step for each tray, wherein the sealing strength between the first and second films is 80% or less of the sealing strength between the unprinted inner film and the sealing flange.

The sealing strength between the first and second films of the lid is preferably half or less of the sealing strength between the unprinted inner film of the lid and the sealing flange.

The individual self-contained areas of the lid film protrude preferably beyond the sealing flanges of the trays forming in each case a border area of the self-contained area lying outside of the outer self-contained edge of the tray, wherein the first and second films are neither laminated nor sealed together in said border area.

After sealing the film strip to the flanges of the trays, the part of the film strip located outside of the surrounding borders of the self-contained areas are cut or punched away as skeleton waste.

Preferably, each of the first and second films of a lid has a separate unsealed peel corner for easy grasping a film corner of each film separately.

The invention provides also a packaging comprising of a tray that is closed by a lid made of a punched or cut out self-contained area of an inventive film strip. The packaging, in particular a ready meal packaging, comprises a tray having a peripheral circumferential sealing flange and a lid sealed to said flange and peelable therefrom, wherein the lid comprises an inner unprinted film made of a polyester and an outer flexible film that are peelable from one another. The outer film is at least partly surface and/or reverse printed. The inner and outer films are separate, superimposed flexible films having continuous circumferential sealing sections, wherein the outer film is stacked on top of the inner film and both films have the same size and are aligned to each other and to the sealing flange of the tray. Both films are sealed to one another and to the peripheral sealing flange of the tray only in an area defined by the superimposed sealing sections of the two films that are positioned within the sealing flange of the tray, wherein the peeling strength between the inner film and the sealing flange of the tray is at least 20% higher than the sealing strength between the outer and inner films of the lid. The sealing sections of the inner and outer films are ring-shaped or have the form of an endless loop.

In a preferred packaging the inner film is perforated to vent a packaged product during heating without using a knife.

The sealing sections of the inner and/or outer films may be covered with a sealing layer in the form of first and/or second continuous circumferential sealing loops, or the inner and/or the outer film/s is/are made of a sealable polymer or contain/s a sealable polymeric layer. The continuous circumferential sealing loops of the inner and outer films are ring-shaped or have the form of an endless ring-shaped loop.

In a preferred embodiment of the packaging the outer and the inner lid films each has a separate unsealed peel corner for easy grasping a corner of each film separately.

The inner and/or outer films of the lid are preferably made of one of the group consisting of polyethylene terephthalate (PET), polybutylene terephthalate (PBT), polylactide (PLA) and polyethylene naphthalate (PEN).

The invention further provides a method of producing an inventive packaging comprising a tray and a lid made of an inventive film strip, wherein an inventive film strip is provided from a reel and each individual self-contained area of the film strip that is free of any laminating layer is aligned with one outer self-contained edge surrounding the peripheral sealing flange of the tray. The inner and outer films of the film strip are located above a sealing flange of the tray and the self-contained areas are aligned with the sealing flanges of the tray and both film are sealed to one another and to the sealing flange of the tray in one step. Thereafter, the area of the film strip located outside of the self-contained area of said lid are cut or punched out.

The invention will now be described by way of examples and with reference to the accompanying drawings in which:
- Figure 1: shows schematically a top view onto an inventive film strip;
- Figure 2: shows a cross-section through the film strip of figure 1 along line M-M;
- Figure 3: shows a cross-section through the film strip of figure 1 along line L-L;
- Figure 4: shows schematically a cross-section through an inventive film strip having first and second sealing sections covered with a sealing lacquer;
- Figure 5: shows schematically a top view onto another embodiment of an inventive film strip having three lines of repetitive openings;
- Figure 6: shows schematically a perspective view of a packaging comprising a tray closed with a peelable lid made of an inventive film strip;
- Figure 7: shows schematically a top view of the packaging shown in figure 6.

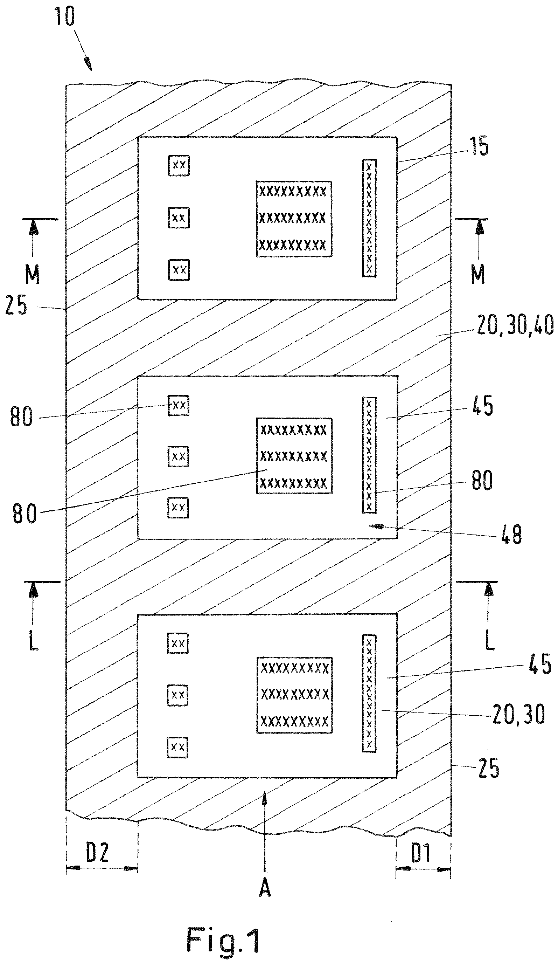

Figure 1 shows schematically a top view onto a section of an inventive film strip 10 that has on both sides a lateral film border 25 and comprises two superimposed polymer films 20, 30, a first film 20 made of polyester and not having any printing and a second flexible film 30 that is at least partly surface and/or reverse printed. In the embodiment shown in figure 1 film 20 is the lower laying film 20 and film 30 is the upper lying film. The films 20, 30 are pattern laminated together by a continuous intermediate laminating layer 40 made of a laminating lacquer or an adhesive. The pattern laminating layer 40 has a single line A of repetitive openings 45 running along the longitudinal direction of the film strip 10. The longitudinal direction of the film strip 10 corresponds to the arrow denominated with A. The repetitive openings 45 are spaced apart from each other, wherein fig.1 shows a succession of rectangular openings 45 along the length of the film strip 10. Each rectangular opening 45 has a left-hand and a right-hand border lying parallel to the lateral film borders 25, wherein the right-hand borders of the openings 45 are arranged at a distance D1 from the right-hand film border 25 and the left-hand borders of the openings 45 are arranged at a distance D2 from the left-hand film border 25. The openings 45 of the continuous laminating layer 40 may be regarded as cut-outs of or holes in the laminating layer 40. The left hand and right-hand borders refer to a top view onto the upper film 30 of the film strip 10, wherein the upper film 30 comprises the printings 80. Due to the openings 45 of the laminating layer 40, the superimposed films 20, 30 are not laminated to each other in the areas defined by the openings 45 and consequently form loose film parts in said areas 45.

Both films 20, 30 are transparent, wherein the upper film 30 shows surface printings 80 exclusively in areas above the openings 45 of the intermediate laminating layer 40. All openings 45 of the intermediate laminating layer 40 have the same size and are arranged at the same distance D1, D2 from the lateral film borders 25. The circumference of each opening 45 in the laminating layer 40 is designated with 15.

Each area of the film strip 10 containing a complete opening 45 of the laminating layer 40, i.e. in a top view onto film strip 10 the part of the film strip 10 containing the first and second polymer films 20, 30 lying within circumference border 15 surrounding the opening 45 of the laminating layer 40, describes a self-contained area 48. Consequently, the self-contained areas 48 of the film strip 10 do not comprise any laminating layer 40 between the superimposed first and second polymer films 20, 30.

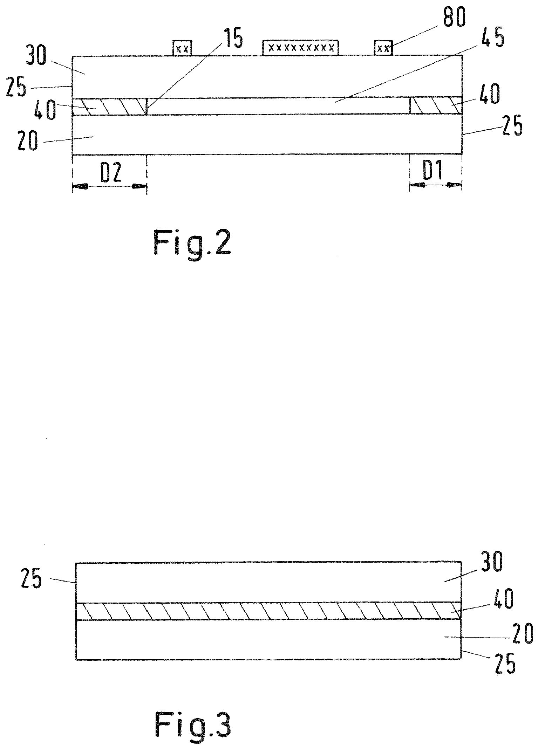

Figure 2 shows a cross-section through the film strip 10 shown in figure 1 along line M-M. The intermediate laminating layer 40 positioned between the first film 20 (lower film) and the second film 30 (upper film) is patterned in that the film strip 10 does not show any laminating layer 40 in the area of the opening 45. The opening 45 leaves a border area of the laminating layer 40 lying between the boundary 15 of the opening 45 and the lateral borders 25 of the film strip 10 having widths D1 and D2, wherein the right-hand border area of the laminating layer 40 has a width D1 and the left-hand border area has a width D2. The upper film 30 is surface printed showing printings 80.

Figure 3 shows a cross-section through the film strip 10 of figure 1 along line L-L. The intermediate laminating layer 40 arranged between the lower film 20 and the upper film 30 is continuous between both lateral film borders 25 of the film strip 10 in this sectional view because there is not any interruption or opening of the laminating layer in this area of the film strip 10. Furthermore, the upper film 30 has no printing 80 in this area, because the printing of the upper film 30 is only present in an area above the openings 45.

The first and second films 20, 30 of the film strip 10 presented in figs. 1 to 3 preferably are made of a heat sealable polymer. Hence, there is no need for the application of a separate sealing layer for sealing the superimposed films 20, 30 to each other and to a sealing flange of a tray or container to be closed when the self-contained areas 48 are cut or punched out.

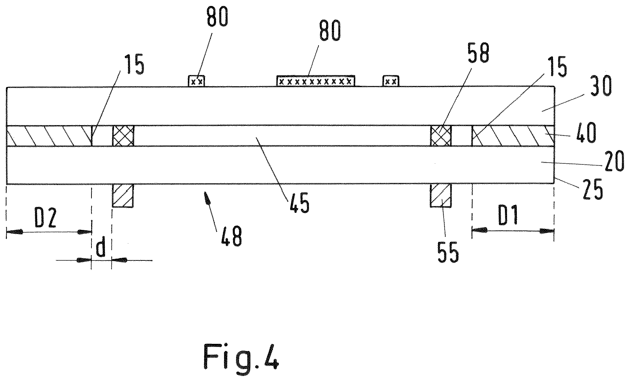

Figure 4 shows schematically a cross-section through a further inventive film strip 10. The areas of the film strip 10 containing the openings 45 of the intermediate laminating layer 40 are self-contained areas 48. The openings 45 have a surrounding border 15. Because the superimposed first and second films 20, 30 preferably are transparent, the surrounding border 15 of the opening 45 may be identified through the polymer films 20, 30. The area of the film strip 10 lying in a top view onto the film strip 10 within said surrounding border 15 consists only of the two superimposed films 20, 30, but does not comprise any intermediate laminating layer 40. The boundary area of the laminating layer 40, i.e. the part of the intermediate laminating layer 40 lying between the borders of the openings 45 and the lateral film borders 25 of the film strip 10 have a width D1 or D2, respectively.

The first film 20 of the film strip 10 shown in figure 4 is coated on its surface opposite to the partially printed second film 30 in at least a peripheral section of each self-contained area 48 with a heat sealing layer in the form of a first continuous circumferential sealing loop 55. Furthermore, the partially printed second film 30 on its surface directed to the first film 20, or the first film 20 on its surface directed to the second film 30 is also coated in at least a peripheral section of each self-contained area 48 with a heat sealing layer in the form of a second continuous circumferential sealing loop 58. Said first and second sealing loops 55, 58 usually are ring-shaped or have the form of an endless loop. The first and second circumferential sealing loops 55, 58 are arranged each at the same distance d to the surrounding border 15 of each opening 45, wherein the first and second circumferential sealing loops 55, 58 are superimposed. The second film 30 (upper film) features printings 80 in the self-contained areas 48. The patterned heat sealing loops 55, 58 have a ring-shaped form and are arranged in a peripheral section of each self-contained area 48.

The structure of the film strip 10 shown in fig. 4 is especially suitable for film strips 10 having polymer films 20, 30 with poor sealing characteristics.

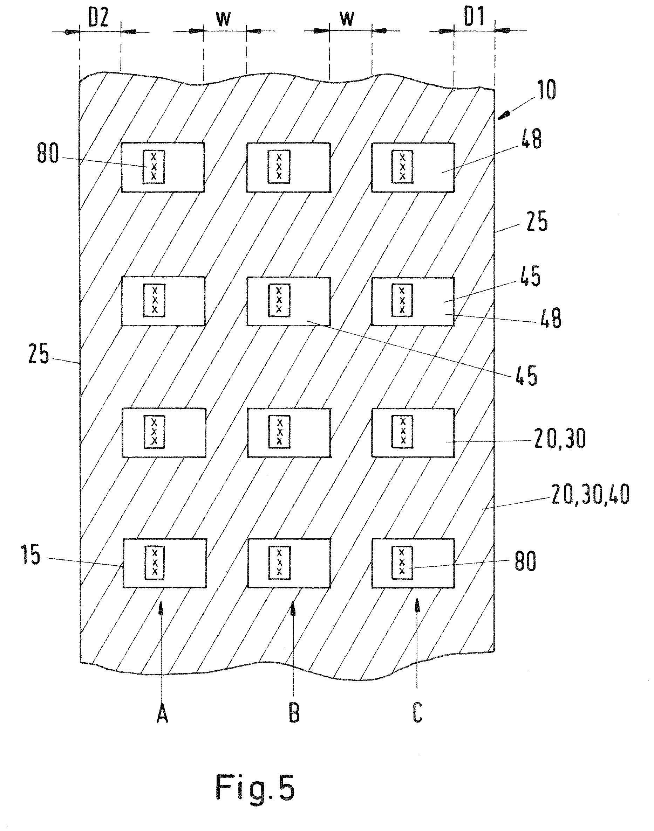

Figure 5 shows schematically a top view onto a section of a further inventive film strip 10 that has on both sides a lateral film border 25 and comprises two superimposed polymer films 20, 30, namely a first film 20 made of polyester and not having any printing and a second flexible film 30 that is at least partly surface and/or reverse printed. The films 20, 30 are pattern laminated together by a continuous intermediate laminating layer 40 made of a laminating lacquer or an adhesive. The pattern laminating layer 40 shown in in figure 5 features three lines A, B, C of repetitive openings 45 running along the longitudinal direction of the film strip 10. The longitudinal direction of the film strip 10 corresponds to the arrows denominated with A, B or C. The repetitive openings 45 are spaced apart from each other, wherein figure 5 shows three lines of succeeding rectangular openings 45 along the length of the film strip 10. The openings 45 of each line A, B, C are aligned such that each opening 45 of a specific line A, B, C has the same spacing to the lateral film borders 25.

The openings 45 of the continuous laminating layer 40 may be regarded as cut-outs or holes in the laminating layer 40. The left hand and right-hand borders refer to a top view onto the upper film 30 of the film strip 10, wherein the upper film 30 comprises the printings 80. Due to the openings 45 of the laminating layer 40, the superimposed films 20, 30 are not laminated to each other in the areas defined by the openings 45 and consequently form loose film parts in said areas 45.

Each rectangular opening 45 has a left-hand and a right-hand border lying parallel to the lateral film borders 25. The right-hand borders of the openings 45 of the rightmost lying line C are positioned at a distance D1 from the right-hand film border 25 and the left-hand borders of the openings 45 of the leftmost lying line A are positioned at a distance D2 from the left-hand film border 25. The openings 45 of adjacent lines A, B, C are spaced apart from each other at a distance w. Said distance w is preferably the same for all intermediary lines B.

Both films 20, 30 are transparent, wherein the upper film 30 shows surface printings 80 exclusively in areas above the openings 45 of the intermediate laminating layer 40. The circumference of each opening 45 in the laminating layer 40 is designated with 15.

Each area of the film strip 10 containing a complete opening 45 of the laminating layer 40, i.e. in a top view onto film strip 10 the part of the film strip 10 containing the first and second polymer films 20, 30 lying within circumference border 15 surrounding the opening 45 of the laminating layer 40, describes a self-contained area 48. Consequently, the self-contained areas 48 of the film strip 10 do not comprise any laminating layer 40 between the superimposed first and second polymer films 20, 30. Because the pattern laminated layer 40 features three lines A, B, C of repetitive openings 45 running along the longitudinal direction of the film strip 10, the film strip 10 also features three lines A, B, C of self-contained areas 48.

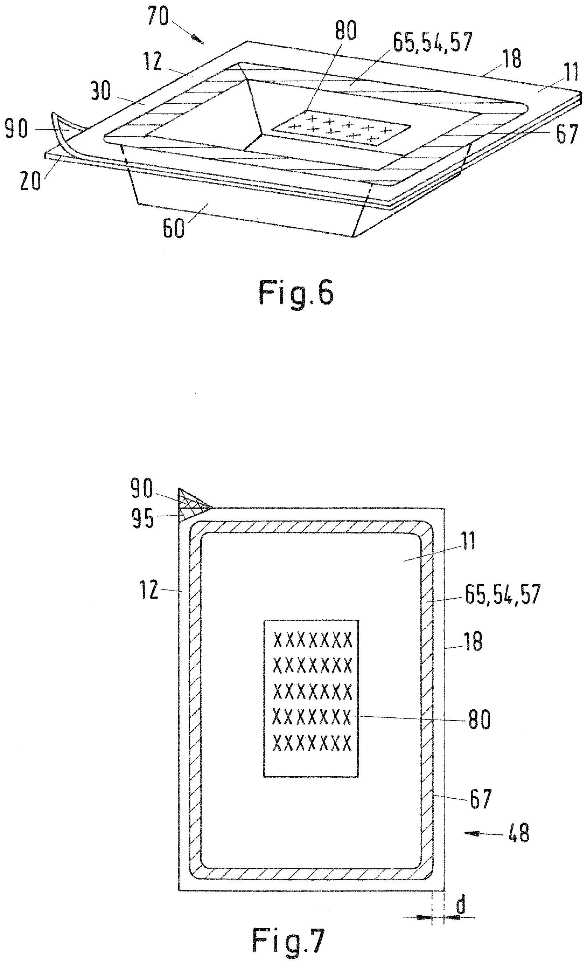

Figure 6 shows a perspective view of a packaging 70 comprising a tray 60 having a peripheral sealing flange 65 and a lid 11 sealed to the sealing flange 65 of the tray 60, wherein the lid 11 is peelable from the sealing flange 65. The lid 11 is made of a punched or cut out self-contained area 48 of a film strip 10.

The lid 11 comprises an inner unprinted film 20 made of a polyester and an outer flexible film 30 that comprises at least partly a surface and/or reverse printing 80. The inner and outer films 20, 30 are separate, superimposed flexible films having sealing sections 54, 57 which run along a peripheral border area of the lid 11, wherein the sealing sections 54, 57 are spaced apart from the outer edge of the lid 11 by a width d. These sealing sections 54, 57 and the sealing flange 65 of the tray are superimposed. The outer film 30 is stacked on top of an inner film 20 having the same size and both films 20, 30 are sealed to one another and to the peripheral sealing flange 65 of the tray 60. The sealing of both films 20, 30 to one another and to the flange 65 is preferably done in one step and takes place only in an area defined by the superposed sealing sections 54, 57 that are positioned within the sealing flange 65 of the tray 60. These films 20, 30 are peelable from one another and from the flange 65 of the tray 60, wherein the peeling strength between the two films 20, 30 is 80% or less of the sealing strength between the unprinted inner film 20 and the sealing flange 65 of the tray 60. The sealing strength between the two films 20, 30 is preferably half or less of the sealing strength between the unprinted inner film 20 and the sealing flange 65 of the tray 60.

The lid 11 protrudes the flange 65 of the tray 60 or the surrounding edge 67 of the flange 65, respectively, wherein the width of the protruding border area 12 of the lid 11 is preferably about the same along the circumference of the flange 65 and has a width d. The outer film 30 of the lid 11 of the packaging 70 shown in figure 6 usually has a surface and/or reverse printing 80. The lid 11 protruding the flange 65 of the tray 60 features two separate, unsealed peel corners 90, 95 for easy grasping a film corner 90 of the outer film 30 and a peel corner 95 of the inner film 20.

Figure 7 shows a top view of the packaging 70 presented in figure 6, i.e. the packaging 70 comprises a tray 60 having a peripheral sealing flange 65 and a lid 11 sealed to the sealing flange 65 of the tray 60, wherein the lid 11 is peelable from the sealing flange 65. The lid 11 is made of a punched or cut out self-contained area 48 of a film strip 10. The lid 11 comprises an inner unprinted film 20 made of a polyester and an outer flexible film 30. These films 20, 30 are peelable from one another. The outer film 30 has a surface printing 80 within an area surrounded by the sealing flange 65. Both films 20, 30 are transparent thus allowing to see the subjacent sealing flange 65 and the sealing sections 54, 57 in a top view. The sealing sections 54, 57 of films 20, 30 and the sealing flange 65 are superimposed. The extent of the lid 11 corresponds to the self-contained area 48 of the film strip 10 of which the lid 11 is made. The lid film 11 is larger than the outer self-contained edge 67 of the sealing flange 65 of the tray 60 and is centred relative to said circumferential flange 65. The lid 11 protrudes beyond the sealing flanges 65 forming a border area 12 having about a constant width along the circumference of the flange 65. The surrounding border 18 of the lid 11 is arranged at a distance d from the outer self-contained edge 67 of the flange 65. The inner and outer films 20, 30 in the protruding border area 12 of the lid 11 are neither laminated together, nor sealed to the sealing flanges 65. Figure 6 shows also the peel corner 90 of the outer film 30 and the peel corner 95 of the inner film 20. These peel corners 90, 95 are part of the respective inner and outer films 20, 30 and are arranged in the protruding border area 12.

## Claims

1. Film strip (10) for sealing trays, the film strip (10) has on both sides a lateral film border (25) and comprises two superimposed polymer films (20, 30) that are pattern laminated together by a continuous intermediate laminating layer (40) made of a laminating lacquer or an adhesive, wherein one first film (20) does not feature any printing and is made of a polyester and the other second film (30) is a flexible film which is at least partially surface and/or reverse printed (80),
**characterised in that**
the laminating layer (40) features one or more lines (A, B, C) of repetitive openings (45), each line of repetitive openings (45) run along the longitudinal direction of the film strip (10), wherein the openings (45) of two adjacent parallel lines are positioned at a predefined fixed distance w and the openings (45) of each outermost line have a predefined fixed distance (D1, D2) from the lateral film borders (25), wherein the superimposed films (20, 30) are not laminated to each other in the areas defined by the openings (45) thus forming loose film parts in said areas.

2. Film strip (10) according to claim 1, **characterised in that** each of the openings (45) has a surrounding border (15), wherein the surface or reverse printing (80) of the second film (30) is only present within the areas of the second film (30) lying above the surrounding borders (15).

3. Film strip (10) according to claim 1 or 2, **characterised in that** the second film (30) and/or the first film (20) is/are made of a heat sealable polymer.

4. Film strip (10) according to any one of claims 1 to 3, **characterised in that** each area of the film strip (10) containing a complete opening (45) of the laminating layer (40) describes a self-contained area (48), wherein the first film (20) not having any printing is coated on its surface opposite to the partially printed second film (30) in at least a peripheral section of each self-contained area (48) with a heat sealing layer in the form of a first continuous circumferential sealing loop (55).

5. Film strip (10) according to claim 4, **characterised in that** the first circumferential sealing loop (55) is arranged at a predefined fixed distance (d) to the surrounding border (15) of the opening (45).

6. Film strip (10) according to claim 4 or 5, **characterised in that** the partially printed second film (30) on its surface directed to the first film (20) or the first film (20) on its surface directed to the second film (30) is coated in at least a peripheral section of each self-contained area (48) with a heat sealing layer in the form of a second continuous circumferential sealing loop (58).

7. Film strip (10) according to claim 6, **characterised in that** the first and second circumferential sealing loops (55, 58) are arranged each at the same predefined distance (d) to the surrounding border (15) of each opening (45), wherein the first and second circumferential sealing loops (55, 58) are superimposed.

8. Film strip (10) according to claim 6 or 7, **characterised in that** the first and second circumferential sealing loops (55, 58) run along a peripheral border area of each individual self-contained area (48) and are superimposed, wherein the first circumferential sealing loop (55) is arranged on the surface of the first film (20) lying opposite to the partially printed second film (30) and the second circumferential sealing loop (58) is arranged between the first and second films (20, 30).

9. Film strip (10) according to any one of claims 1 to 8, **characterised in that** the film (20) not having any printing is perforated.

10. Film strip (10) according to any one of claims 1 to 9, **characterised in that** the films (20, 30) are made of one of the group consisting of polyethylene terephthalate (PET), polybutylene terephthalate (PBT), polylactide (PLA) and polyethylene naphthalate (PEN).

11. Use of a film strip (10) according to one claims 1 to 10 for providing peelable lids for sealing trays (60), in particular for sealing trays containing a ready meal, wherein each tray (60) has an outer self-contained edge (67) surrounding a peripheral sealing flange (65) of the tray (60), the areas of the film strip (10) containing the openings (45) of the laminating layer (40) describe a number of individual self-contained areas (48) not featuring any laminating lacquer or adhesive (40) between the first and second films (20, 30), wherein the extent of each of said individual self-contained area (48) corresponds to at least the area enclosed by the outer self-contained edge (67) of each tray (60) and wherein each of the individual self-contained area (48) is aligned with an area enclosed by an outer self-contained edge (67) of the tray (60) such that each self-contained area (48) of the film strip (10) protrudes beyond a respective sealing flange (65), the film strip (10) is arranged to have the unprinted first film (20) directed to the sealing flanges (65) of the trays (60) and the superimposed first and second films (20, 30) of the film strip (10) are sealed together in the areas above and along the whole circumferential sealing flange (65) of each tray (65) and to the whole circumferential sealing flange (65) of each tray (60) in one single step, wherein the sealing strength between the first and second films (20, 30) is 80% or less of the sealing strength between the unprinted first film (20) and the sealing flange (65).

12. Use according claim 11, characterized that the sealing strength between the first and second films (20, 30) is half or less of the sealing strength between the unprinted inner film (20) and the sealing flange (65).

13. Use according to claim 11 or 12, **characterized in that** the individual self-contained areas (48) protrude beyond the sealing flanges (65) of the trays (60) forming in each case a border area (12) of the self-contained area (48) lying outside of the outer self-contained edge (67) of the tray (60), wherein the first and second films (20, 30) are neither laminated nor sealed together in the border area (12).

14. Use according to one of claims 11 to 13, **characterized in that** the part of the film strip (10) located outside of the surrounding borders of the self-contained areas (48) are cut or punched away as skeleton waste.

15. Use according to one of claims 11 to 14, **characterized in that** the each of the first and second films (20, 30) has a separate unsealed peel corner (90, 95) for easy grasping a film corner (90, 95) of each of the films (20, 30) separately.

16. Packaging (70), in particular a ready meal packaging, comprising a tray (60) having a peripheral sealing flange (65) and a lid (11) sealed to the flange (65) and peelable therefrom, wherein the lid (11) is made of a punched or cut out self-contained area (48) of a film strip (10) according to one of claims 1 to 10, the lid (11) comprising an inner unprinted film (20) made of a polyester and an outer flexible film (30) that are peelable from one another, wherein the outer film (30) is at least partly surface and/or reverse printed,
**characterised in that**
the inner and outer films (20, 30) are separate, superimposed flexible films, wherein the outer film (30) is stacked on top of the inner film (20) having the same size and both films (20, 30) are sealed to one another and to the peripheral sealing flange (65) of the tray (60) only in an area defined by superimposed sealing sections (54, 57) of the two films (20, 30) that are positioned within the sealing flange (65), wherein the peeling strength between the inner film (20) and the sealing flange (65) of the tray (60) is at least 20% higher than the sealing strength between the outer and inner films (20, 30).

17. Packaging according to claim 16, **characterised in that** the inner film (20) is perforated to vent a packaged product during heating without using a knife.

18. Packaging according to claim 16 or 17, **characterised in that** the sealing sections (54, 57) of the inner and/or outer films (20, 30) are covered with a sealing layer in the form of first and/or second continuous circumferential sealing loops (55, 58), or the inner and/or the outer film/s is/are made of a sealable polymer or contain/s a sealable polymeric layer.

19. Packaging according to one of claims 16 to 18, **characterised in that** the outer and the inner lid films (20, 30) each has a separate unsealed peel corner (90, 95) for easy grasping a film corner (90, 95) of each of the films (20, 30) separately.

20. Packaging according to one of claims 16 to 19, **characterised in that** the inner and/or outer films (20, 30) of the lid (11) are made of one of the group consisting of polyethylene terephthalate (PET), polybutylene terephthalate (PBT), polylactide (PLA) and polyethylene naphthalate (PEN).

21. A method of producing a packaging (70) according to one of claims 16 to 20, **characterised in that** a film strip (10) according to one of claims 1 to 10 is provided wherein each individual self-contained area (48) of the film strip (10) that is free of any laminating layer (40) is aligned with one outer self-contained edge (67) surrounding the peripheral sealing flange (65) of a tray (60), sealing the superimposed sealing sections (54, 57) of the inner and outer films (20, 30) of the film strip (10) located above the sealing flange (65) of the tray (60) to each other and to the sealing flanges (65) of the tray (60) in one step and cutting or punching out the area of the film strip (10) located outside of the self-contained area (48) of said lid (11).
